# EUROPÄISCHE PATENTSCHRIFT

(11) **EP 1 512 209 B1**
(45) Veröffentlichungstag und Bekanntmachung des Hinweises auf die Patenterteilung: **28.11.2007**
(21) Anmeldenummer: 03756946.4
(22) Anmeldetag: 21.05.2003
(51) Int. Cl.: H02J 7/14

(54) **ANORDNUNG ZUR SPANNUNGSVERSORGUNG MEHRERER VERBRAUCHER UND STEUERGERÄT FUR EIN MINDESTENS ZWEI ENERGIESPEICHER UMFASSENDES BORDNETZ**
ARRANGEMENT FOR VOLTAGE SUPPLY TO SEVERAL USERS AND CONTROLLER FOR AN ON-BOARD NETWORK COMPRISING AT LEAST TWO ENERGY STORES
SYSTEME POUR ALIMENTER EN TENSION PLUSIEURS RECEPTEURS ET DISPOSITIF DE COMMANDE DESTINE A UN RESEAU DE BORD COMPRENANT AU MOINS DEUX ACCUMULATEURS D'ENERGIE

(30) Priorität: 11.06.2002 DE 10225951
(43) Veröffentlichungstag der Anmeldung: 09.03.2005
(73) Patentinhaber: DaimlerChrysler AG, 70327 Stuttgart (DE)
(72) Erfinder: GROSS, Christof, 71384 Weinstadt-Strümpfelbach (DE); KÖNIG, Jochen, 71069 Sindelfingen (DE); LÖWEL, Andreas, 71134 Aidlingen (DE); PETRY, Franz-Josef, D-71134 Aidlingen (DE)
(74) Vertreter: Eschbach, Arnold
(86) Internationale Anmeldenummer: PCT/DE2003/001643
(87) Internationale Veröffentlichungsnummer: WO 2003/105330

(56) Entgegenhaltungen:
- EP-A- 1 093 974
- EP-A- 1 137 150
- WO-A-98/02950
- DE-A- 19 906 305
- FR-A- 2 739 733

## Beschreibung

Die Erfindung betrifft eine Anordnung zur Spannungsversorgung mehrerer Verbraucher, insbesondere für ein Fahrzeug. Des weiteren betriff die Erfindung ein Steuergerät für ein mindestens zwei Energiespeicher umfassendes Bordnetz.

Die Entwicklung neuer Komponenten im Automobilbau, wie z.B. die elektromagnetische Ventilsteuerung (kurz EMVS genannt), oder auch Verbraucher wie die elektrische Frontscheibenheizung, sowie der Trend, bisher über Riemen angetriebene Komponenten elektrisch anzutreiben, haben die elektrische Gesamtleistung der zu versorgenden Verbraucher stark anwachsen lassen. Ein hieraus resultierender erhöhter Leistungsbedarf kann dabei durch ein herkömmliches 12V-Bordnetz mit 14V-Generatorspannung nicht abgedeckt werden. Daher ist es bekannt, ein Bordnetz mit mehreren Spannungsebenen, z.B. 12V und 42V, oder mit mehreren Batterien vorzusehen. Auch sich stetig erhöhende Anforderungen an die Verfügbarkeit der Bordnetzversorgung treiben die Entwicklung in bestimmte Richtungen.

Aus der DE 40 28 242 A1 ist beispielsweise eine Anordnung für ein Bordnetz mit zwei Batterien bekannt, die im Normalbetrieb miteinander verbunden sind und bei Bedarf getrennt werden. Über einen Generator werden bei Verbindung beider Batterien diese gleichzeitig aufgeladen. Eine die Kapazität der Batterien berücksichtigende Schaltung von Verbrauchern ist dabei nicht möglich.

Aus der DE 100 33 317 A1 ist eine Anordnung mit selbsthaltendem Relais bekannt, die zur Notversorgung von Verbrauchern eine Umschaltung auf eine Notbatterie bewirkt. Hierbei ist eine Berücksichtigung der vom jeweiligen Verbraucher erforderlichen Ladungsentnahme nicht möglich. Somit können sich die verschiedenen Verbraucher gegenseitig Ladung entziehen. Darüber hinaus ist bei Ausfall des Relais die Funktion der gesamten Anordnung gestört.

Des Weiteren ist aus der DE 196 45 944 A1 ein Steuergerät für ein Bordnetz mit wenigstens zwei von einem Generator aufladbaren Batterien bekannt. Dabei wird mittels des Steuergeräts eine Verbindung zwischen den beiden Batterien derart gesteuert, dass in Abhängigkeit von vorgebbaren Daten, z.B. Nachladung einer zweckgebundenen Batterie, die Verbindung geöffnet oder geschlossen wird. Dabei kann jede Batterie für sich durch daran angeschlossene Verbraucher entladen werden. Somit ist eine für alle Verbraucher hinreichende Kapazität der betreffenden Batterie nicht jederzeit gegeben.

Um insbesondere in kritischen Situationen eine Versorgung von einzelnen Verbrauchern zu ermöglichen, weisen diese unabhängig von der Kapazität der betreffenden Batterie jeweils zugehörige separate Puffer- oder Notbatterien auf. Derartige verbrauchereigene Pufferbatterien sind sogenannte Primärbatterien (nicht aufladbar), die eine begrenzte Lebensdauer aufweisen. Alternativ sind die Pufferbatterien als Akkumulatoren ausgebildet. Verbrauchereigene Notversorgungen sind besonders aufwendig und kostenintensiv. Darüber hinaus kommt es aufgrund der steigenden Anzahl von elektronischen Verbrauchern, welche eine derartige Back-Up-Versorgung benötigen, zu einem erhöhten Platzbedarf. Ferner weisen derartige zusätzliche Notversorgungen ein besonders hohes Gewicht auf, welches zu einem erhöhten Verbrauch des Fahrzeugs führt.

DE 19921451C1 offenbart ein Bordnetz zur Versorgung elektrisch betriebener Verbraucher bei Kraftfahrzeugen. Dabei sind mehrere, auch unterschiedliche Spannungen aufweisende Stromversorgungsquellen sowie Sensormittel zur Erfassung eines Ausfalls eines Stromversorgungsquelle vorgesehen, die Schaltmittel zur Anschaltung einer intakten Stromversorgungsquelle betätigen. Das Bordnetz weist als Mehrspannungsbordnetz mehrere, mit unterschiedlichen Spannungen betriebene und jeweils entsprechend ausgebildete Verbraucher aufweisende Bordnetzkreise auf. Jeder Bordnetzkreis ist ständig mit seiner zugeordneten Stromversorgungsquelle verbunden. Weiterhin sind Überkreuzspannungsmittel vorgesehen, die bei Ausfall oder Störung eines Bordnetzkreises selbsttätig eine Versorgung der an diesem ausgefallenen Bordnetzkreis angeschlossenen Verbraucher aus einem der anderen Bordnetzkreise dadurch sicherstellt, dass von einem intakten Bordnetzkreis eine zusätzliche Stromverbindung zum ausgefallenen Bordnetzkreis geschaltet wird.

EP 1137150 beschreibt ein Zwei-Batteriensystem, umfassend eine Starterbatterie und eine Bordnetzbatterie, wobei die elektrischen Verbraucher in startrelevante Verbraucher und Bordnetzverbraucher eingeteilt sind.

Ein Batterie-Steuergerät zuordnet wechselseitig, je nach Betriebszustand, die startrelevanten Verbraucher mittels Schaltelementen der Starter- oder der Bordnetzbatterie.

Der Erfindung liegt daher die Aufgabe zugrunde, eine Anordnung zur Spannungsversorgung mehrerer Verbraucher, insbesondere eines Fahrzeugs, anzugeben, welche eine besonders einfache Notversorgung von einzelnen Verbrauchern ermöglicht. Des Weiteren ist ein Steuergerät für ein mindestens zwei Energiespeicher umfassendes Bordnetz anzugeben, welches eine besonders einfache Notfallversorgung einzelner Verbraucher ermöglicht.

Die Aufgabe wird erfindungsgemäß gelöst durch die kennzeichnenden Merkmale der unabhängigen Ansprüche. Vorteilhafte Ausführungen sind Bestandteil der Unteransprüche.

Die Erfindung geht von der Überlegung aus, dass eine einfache Versorgung von Verbrauchern erreichbar ist, indem auf separate Notversorgungen in Form von verbrauchereigenen Notfallbatterien oder Akkumulatoren verzichtet wird. Die Anzahl der zu versorgenden, elektrischen Verbraucher setzt sich jedoch aus solchen Verbrauchern zusammen, die auch in kritischen Situationen funktions- oder sicherheitsbedingt versorgt werden müssen, und jenen Verbrauchern, die lediglich im Normalbetrieb versorgt werden müssen. Dazu weist die Anordnung ein mindestens zwei Energiespeicher umfassendes Bordnetz auf, von denen ein erster Energiespeicher in einem Starterteilkreis mit einem Starter zum Anlassen eines Motors verbunden ist, und von denen ein zweiter Energiespeicher in einem Verbraucherteilkreis mit den Verbrauchern verbunden ist. Dabei ist der Starterteilkreis über ein Koppelelement mit dem Verbraucherteilkreis verbunden, wobei eine Anzahl von als sicherheitsrelevant eingestuften Verbrauchern über ein zusätzliches Koppelelement mit dem Starterteilkreis verbindbar sind.

Zweckmäßigerweise sind die sicherheitsrelevanten Verbraucher mittels des zusätzlichen Koppelements ganz oder weitgehend ruhestromfrei an den Starterteilkreis angekoppelt. Hierdurch ist sichergestellt, dass der Starterteilkreis und insbesondere der daran angeschlossene Energiespeicher, z.B. eine sogenannte Starterbatterie, weitgehend frei von Ruheströmen sind. Insbesondere bei Fahrzeugstillstand oder im Falle einer Abschaltung des Generators oder bei Motorstillstand wird der Energiespeicher des Starterteilkreises somit nur gering oder gar nicht durch Ruheströme angeschlossener Verbraucher entladen. Dies ermöglicht eine für die Startfähigkeit des Fahrzeugs hinreichende Energiemenge im Energiespeicher.

Vorzugsweise ist dem jeweiligen sicherheitsrelevanten Verbraucher ein einzelnes zusätzliches Koppelelement zugeordnet. Hierdurch ist zusätzlich zur geringfügigen oder gar keinen Entladung des Energiespeichers durch Ruheströme von sicherheitsrelevanten Verbrauchern bei Unterschreitung der für die Startfähigkeit erforderlichen Kapazität des Energiespeichers eine Abschaltung von einzelnen elektrischen Verbrauchern ermöglicht. Beispielsweise werden dazu die sicherheitsrelevanten Verbraucher entsprechend ihrer Funktion priorisiert, so dass bei Bedarf einzelne Verbraucher in vorgegebener Reihenfolge abgeschaltet werden. Mit anderen Worten: Die sicherheitsrelevanten Verbraucher werden entsprechend einer Rangfolge sortiert und rangfolgemäßig geschaltet. Dies ermöglicht ein prozessabhängiges und zudem vorrangiges Schalten, Ab- oder Zuschalten, von Verbrauchern, die insbesondere die Funktionsfähigkeit des Fahrzeugs und/oder den Schutz der Umwelt sicherstellen. Hierdurch ist zudem ein Spannungseinbruch des Energiespeichers oder der Stromversorgungsquelle sicher vermieden. Somit ist eine besonders vorteilhafte Ausnutzung des Energiespeichers des Starterteilkreises ermöglicht.

Vorteilhafterweise sind das Koppelelement und das zusätzliche Koppelelement in ein Steuergerät integriert. Dies ermöglicht eine besonders einfache und kompakte Anordnung der Koppelelemente im Steuergerät. Darüber hinaus ist der Verkabelungsaufwand gering und eine einfache und schnelle Wartung der Koppelelemente beider Teilkreise und aller Verbraucher ermöglicht.

Bevorzugt umfasst das Steuergerät mindestens ein Mittel zur Erfassung von den jeweiligen Teilkreis repräsentierenden Betriebsgrößen. Insbesondere zur Überwachung beider Teilkreise und zur Einhaltung von die Funktionsfähigkeit oder die Startfähigkeit des Fahrzeugs sicherstellender Kapazität des betreffenden Energiespeichers ist als Mittel zur Erfassung von Betriebsgrößen beispielsweise ein Spannungsmesser und/oder ein Strommesser vorgesehen. Zur Messung der dem jeweiligen Energiespeicher entnommenen Ladungsmenge kann zusätzlich als Mittel ein Zeitmesser vorgesehen sein.

Alternativ oder zusätzlich umfasst das Steuergerät mindestens ein Mittel zur Erfassung von den jeweiligen sicherheitsrelevanten Verbraucher repräsentierenden Betriebsgrößen- Je nach Art und Ausführung ist je Leistungsausgang des jeweiligen Verbrauchers ein Spannungsmesser, ein Strommesser und/oder ein Zeitmesser vorgesehen. Anhand der erfassten Betriebsgrößen wird verbraucherspezifisch die jeweilige Ladungsentnahme sowie ggf. der Bedarf ermittelt.

Zweckmäßigerweise ist das Steuergerät zur Ansteuerung des jeweiligen Koppelelements der Teilkreise und/oder der sicherheitsrelevanten Verbraucher ausgebildet. Dies ermöglicht, dass z.B. bei Unterschreiten einer erforderlichen Batteriekapazität im Starterteilkreis, einzelne Verbraucher direkt geschaltet, insbesondere ab- und/oder zugeschaltet, werden können. Darüber hinaus ist mittels eines steuerbaren DC/DC-Wandlers ein gegenseitiges Nachladen der Energiespeicher ermöglicht. Vorzugsweise ist das Steuergerät dabei derart ausgebildet, dass in Abhängigkeit von den erfassten Betriebsgrößen die Verbraucher und/oder die sicherheitsrelevanten Verbraucher geschaltet werden.

In einer bevorzugten Ausführungsform umfasst das zusätzliche Koppelelement mindestens einen Feldeffekttransistor und eine Diode. Das die Teilkreise verbindende Koppelelement ist bevorzugt als Schalter oder Feldeffekttransistor ausgebildet. Die Ausbildung der Koppelelemente mittels Halbleiterelementen ist besonders einfach und kostengünstig.

Bezüglich des Steuergeräts für ein mindestens zwei Energiespeicher umfassendes Bordnetz mit einem einen erste Energiespeicher und einen Starter zum Anlassen eines Motors umfassenden Starterteilkreis und einen einem zweiten Energiespeicher und mehrere Verbraucher umfassenden Verbraucherteilkreis sind erfindungsgemäß ein Koppelelement zur Kopplung des Starterteilkreises mit dem Verbraucherteilkreis und mindestens ein zusätzliches Koppelelement zur Kopplung einer Anzahl von als sicherheitsrelevant eingestuften Verbrauchern mit dem Starterteilkreis vorgesehen. Durch ein derartig ausgebildetes Steuergerät ist eine weitgehend variable Ausgestaltung der Bordnetzstruktur bei gleichzeitig hinreichender Notversorgung von sicherheitsrelevanten Verbrauchern möglich.

Zweckmäßigerweise ist mindestens ein Mittel zur Erfassung von die Teilkreise und/oder die Verbraucher repräsentierenden Betriebsgrößen vorgesehen. Dabei umfasst das Steuergerät bevorzugt mindestens eine Datenverarbeitungseinheit zur Verarbeitung von die Teilkreise und/oder die Verbraucher repräsentierenden Betriebsgrößen. Durch die Verwendung einer busfähigen Datenverarbeitungseinheit, z.B. eines Mikroprozessors, ist eine Anbindung des Steuergeräts an andere busfähige Steuergeräte des Fahrzeugs ermöglicht. Darüber hinaus können verschiedene Betriebsdaten ausgetauscht und bei der Bordnetzsteuerung mittels des zugehörigen Steuergeräts berücksichtigt werden. Insbesondere durch die Integration und/oder Anbindung der Koppelelemente im bzw. am Steuergerät können bei der Schaltung der Koppelelemente andere Betriebsgrößen, wie z.B. Drehzahl, oder bordnetztypische Größen, wie z.B. Generatordaten, berücksichtigt werden.

Bevorzugt sind die Energiespeicher der Teilkreise derart dimensioniert, dass diese nur zusammengeschaltet die für einen Kaltstart der Verbrennungsmaschine oder des Motors erforderliche Lademenge aufweisen. Hierdurch können die einzelnen Energiespeicher oder Batterien hinsichtlich Gewicht und Größe optimiert werden.

Die mit der Erfindung erzielten Vorteile bestehen insbesondere darin, dass durch die Unterteilung der Speisung von sicherheitsrelevanten Verbrauchern in eine Betriebsversorgung und in eine Notversorgung anhand von voneinander entkoppelten Teilkreisen eines Bordnetzes auf verbrauchereigene und somit zusätzliche Notbatterien, Pufferakkus und deren Ladeeinrichtungen verzichtet werden kann. Darüber hinaus ist durch eine derartige redundanten Bespeisung von sicherheitsrelevanten Verbrauchern die Funktionsfähigkeit diese in weitgehend allen Situationen möglich. Ferner ist durch eine derartige Trennung der Speisung in Not- und Standardversorgung durch voneinander entkoppelte und örtlich getrennt angeordnete Teilkreise sichergestellt, dass selbst bei Ausfall eines der Energiespeicher durch Beschädigung infolge eines Unfalls oder durch zu hohe Entnahme stets eine hinreichende Versorgung der sicherheitsrelevanten Verbraucher ermöglicht ist. Beispielsweise ist dazu einer der Energiespeicher mit zugehöriger Vorzugsladeeinrichtung nur zum Zwecke der Notversorgung ausgebildet. Eine hierdurch zur Verfügung gestellte Ladungsmenge des betreffenden Energiespeichers kann somit auf zugeordnete Leistungspfade verschiedener sicherheitsrelevanter Verbraucher verteilt werden. Somit ist auch im Notfall eine höhere Verfügbarkeit als bei Einzelnotversorgungen in Form von Pufferbatterien ermöglicht.

Diese und andere Aufgaben, Vorteile und Merkmale der vorliegenden Erfindung werden aus der nachfolgenden detaillierten Beschreibung bevorzugter Ausführungsbeispiele der Erfindung anhand der Zeichnung näher erläutert.

Dabei zeigen:
- Fig. 1: schematisch eine Anordnung zur Spannungsversorgung mehrerer Verbraucher mit einem einen Starterteilkreis und einen Verbraucherteilkreis umfassenden Bordnetz und einem Steuergerät,
- Fig. 2: schematisch das Steuergerät gemäß Figur 1 im Detail und
- Fig. 3: schematisch die Anordnung zur Spannungsvorsorgung nach Figur 1 für ein Bordnetz eines Fahrzeugs.

Einander entsprechende Teile sind in allen Figuren mit den gleichen Bezugszeichen versehen.

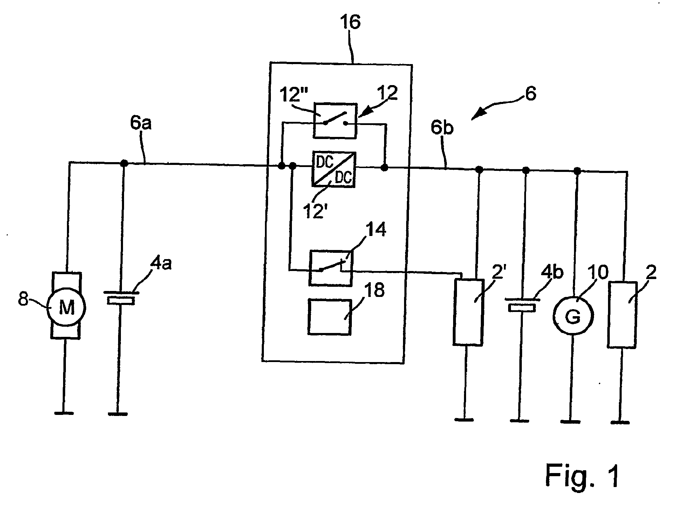

Figur 1 zeigt schematisch eine Anordnung 1 zur Spannungsversorgung mehrerer Verbraucher 2. Die Anordnung 1 umfasst zwei Energiespeicher 4a und 4b, die Teil eines Bordnetzes 6 sind. Der erste Energiespeicher 4a ist dabei in einem Starterteilkreis 6a des Bordnetzes 6 mit einem Starter 8 zum Anlassen eines nicht näher dargestellten Motors verbunden. Der zweite Energiespeicher 4b ist in einem Verbraucherteilkreis 6b des Bordnetzes 6 mit den Verbrauchern 2 und einem Generator 10 verbunden. Je nach Art und Ausbildung des Bordnetzes 6 können weitere Energiespeicher 4a bis 4z mit einer weiteren Unterteilung des Bordnetzes 6 in weitere Teilkreise 6a bis 6z vorgesehen sein. Die Verbraucher 2 können dabei jeweils über nicht näher dargestellte Schalter zugeschaltet werden.

Zur Entkopplung der beiden Teilkreise 6a und 6b voneinander oder zur Kopplung für eine bedarfsweise Nachladung des einen Energiespeichers 4b durch den anderen Energiespeicher 4a ist ein Koppelelement 12 vorgesehen. Das Koppelelement 12 umfasst beispielsweise einen Gleichspannungswandler 12' und/oder einen Schalter 12", insbesondere ein Halbleiterschaltelement, z.B. einen Feldeffekttransistor.

Die Entkopplung der beiden Teilkreise 6a und 6b ermöglicht, dass der jeweilige Teilkreis 6a bzw. 6b entsprechend seiner Funktion - Starterteilkreis bzw. Verbraucherteilkreis - geregelt wird. Dabei dient der Verbraucherteilkreis 6b der Bespeisung der Verbraucher 2, wobei diese entsprechend ihrer Funktion unterteilt sind in sicherheitsrelevante Verbraucher 2' und in für den Normalbetrieb relevante Verbraucher 2. Der Starterteilkreis 6a dient mit dem zugehörigen Energiespeicher 4a insbesondere zur Sicherung der Startfähigkeit einer zugehörigen technischen Anlage, z.B. einer Verbrennungsmaschine.

Insbesondere der Energiespeicher 4b, auch Verbraucherbatterie genannt, des Verbraucherteilkreises 6b wird im Betrieb der Anordnung 1 fortlaufend durch die angeschlossenen Verbraucher 2 und 2' entladen. Zur Wiederaufladung des als Verbraucherbatterie ausgebildeten Energiespeichers 4b ist dieser im Betrieb der Anordnung 1 mit dem Generator 10 zur Energieversorgung verbunden.

Zur Aufrechterhaltung der Versorgung der sicherheitsrelevanten Verbraucher 2' auch bei einem Ausfall des Energiespeichers 4b umfasst die Anordnung 1 ein zusätzliches Koppelelement 14, welches die als sicherheitsrelevant eingestuften Verbraucher 2' mit dem Starterteilkreis 6a verbindet. Das zusätzliche Koppelelement 14 ist beispielsweise als Halbleiterelement, insbesondere als Feldeffekttransistor, ausgebildet.

Zur Steuerung und Regelung des Bordnetzes 6 und dessen Teilkreise 6a und 6b sowie der daran angeschlossenen Verbraucher 2, 2' ist ein Steuergerät 16 vorgesehen. Zur Überwachung und Steuerung der Teilkreise 6a, 6b sowie der Verbraucher 2, 2` umfasst das Steuergerät 16 eine Datenverarbeitungseinheit 18, z.B. einen Mikroprozessor. Je nach Art und Ausbildung der Anordnung 1 sind das Koppelelement 12, das zusätzliche Koppelelement 14 sowie die Datenverarbeitungseinheit 18 in dem Steuergerät 16 integriert.

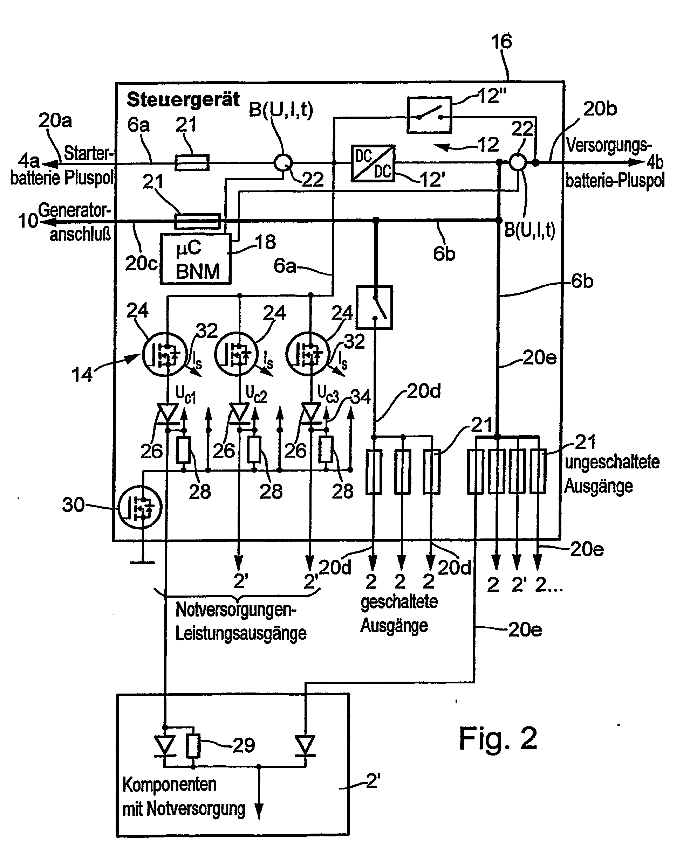

Figur 2 zeigt das Steuergerät 16 im Detail. Das Steuergerät 16 ist über eine Verbindung 20a mit dem Energiespeicher 4a des Starterteilkreises 6a und über eine Verbindung 20b und 20c mit dem Energiespeicher 4b bzw. dem Generator 10 des Verbraucherteilkreises 6b verbunden. Im Normalbetrieb der Anordnung 1 werden die Verbraucher 2 und die als sicherheitsrelevant eingestuften Verbraucher 2` mittels des Verbraucherteilkreises 6b des Bordnetzes 6 bespeist. Hierbei werden die Verbraucher 2 bzw. 2' zu deren Versorgung über geschaltete Verbindungen 20d oder ungeschaltete Verbindungen 20e mit dem Verbraucherteilkreis 6b verbunden. Je nach Art und Ausführung der Ausgänge oder Verbindungen 20a bis 20e können diese gesichert oder ungesichert ausgebildet sein. Besonders sicherheitsrelevante Verbindungen 20a bis 20e, z.B. die Verbindung 20c, können dabei durch eine Sicherung 21, z.B. eine sogenannte pyrotechnische Sicherung, gesichert sein.

Zur Überwachung des Starterteilkreises 6a und des Verbraucherteilkreises 6b umfasst das Steuergerät 16 jeweils mindestens ein Messmittel 22 zur Erfassung von den jeweiligen Teilkreis 6a bzw. 6b charakterisierenden Betriebsgrößen B. Als Betriebsgröße B werden beispielsweise mittels des Messmittels 22 Strom I, Spannung U und/oder Zeit t erfasst. Das Messmittel 22 des jeweiligen Teilkreises 6a bzw. 6b umfasst dazu beispielsweise einen Spannungsmesser, einen Strommesser und/oder einen Zeitmesser. Anhand der erfassten, den jeweiligen Teilkreis 6a oder 6b charakterisierenden Betriebsgrößen B(U, I, t), welche der Datenverarbeitungseinheit 18 zugeführt werden, wird der jeweilige Zustand des zugehörigen Energiespeichers 4a bzw. 4b ermittelt und bestimmt.

Für eine redundante Verbindung der als sicherheitsrelevant eingestuften Verbraucher 2' sind diese zusätzlich zur Anbindung an den Verbraucherteilkreis 6b mittels des zusätzlichen Koppelelements 14 an den Starterteilkreis 6a angeschlossen. Dabei weist das Steuergerät 16 je sicherheitsrelevanter Verbraucher 2' ein zugehöriges Koppelelement 14 auf. Zur weitgehenden Entlastung des Starterteilkreises 6a und somit zur Sicherstellung einer für eine Notversorgung erforderlichen Kapazität des betreffenden Energiespeichers 4a sind die sicherheitsrelevanten Verbraucher 2' mittels des jeweiligen zusätzlichen Koppelelements 14 ganz oder weitgehend ruhestromfrei an den Starterteilkreis 6a angekoppelt.

Die Anordnung ermöglicht eine im Fahrzeugbetrieb durch die freigeschalteten, zusätzlichen Koppelelemente 14 an den sicherheitsrelevanten Verbraucher 2' angelegte Spannung des Energiespeichers 4a (Starterbatterie) stromlose Überwachung der Versorgung des sicherheitsrelevanten Verbrauchers 2' durch den Starterteilkreis 6a unabhängig davon, ob der Verbraucherteilkreis 6b plötzlich ausfällt oder noch intakt ist. Etwaige Fehler werden rechtzeitig erkannt und angezeigt. Durch die beschriebene Anordnung wird ein dreistufiges Versorgungskonzept mit voneinander weitgehend unabhängigen Versorgungsmöglichkeiten dargestellt, worin der besondere Wert der Anordnung besteht. Die erste Stufe ist der Normalbetrieb mit Versorgung von des sicherheitsrelevanten Verbrauchers 2' durch Verbraucherteilkreis 6b und Überwachung der Verfügbarkeit der Versorgung des sicherheitsrelevanten Verbrauchers 2' durch den Starterteilkreis 6a über ein zugehöriges Koppelelement 14. Wird die Verfügbarkeit von des Verbraucherteilkreises 6b geschmälert, kann der Verbraucherteilkreis 6b über das Koppelelement 12" von der Starterbatterie und dem Starterteilkreis 6a gestützt werden, um die gesamte Versorgung zu gewährleisten. Dies repräsentiert Stufe 2. Wird ein großer Defekt mit Totalausfall des Verbraucherteilkreises 6b wirksam, so wird durch Auftrennung des Koppelelements 12" oder einer Sicherung neben dem Koppelelement 12" eine Trennung des Starterteilkreises 6a und des Verbraucherteilkreises 6b erzielt und der sicherheitsrelevanten Verbraucher 2' nur über den Starterteilkreis 6a aus der Starterbatterie versorgt. Dies stellt Stufe 3 dar. Zusammen mit der Überwachung des kompletten Pfades von Versorgung und Notversorgung entsteht eine hochverfügbare Versorgung.

Dazu umfasst das jeweilige Koppelelement 14 bevorzugt einen Feldeffekttransistor 24 und eine Diode 26 sowie parallel dazu einen Widerstand 28. Zusätzlich kann ein weiterer Feldeffekttransistor 30 vorgesehen sein. Über einen Anschluss 32 sind dann als Betriebsgröße B des jeweiligen sicherheitsrelevanten Verbrauchers 2` der Strom Is und über einen weiteren Anschluss 34 die Spannung Uc der Datenverarbeitungseinheit 18 zuführbar.

Somit werden mittels der Datenverarbeitungseinheit 18 des Steuergeräts 16 sowohl die Teilkreise 6a, 6b als auch die sicherheitsrelevanten Verbraucher 2' fortlaufend überwacht. Dabei werden mittels der Datenverarbeitungseinheit 18 anhand der erfassten Daten der Betriebsgrößen B(U, I, t) der Teilkreise 6a, 6b und der sicherheitsrelevanten Verbraucher 2' die je Verbraucher 2' entnommene Ladungsmenge ermittelt, anhand derer dann mittels Steuersignalen in Abhängigkeit von der Kapazität des Energiespeichers 4a bzw. 4b und/oder der Rangfolge des betreffenden als sicherheitsrelevant eingestuften Verbrauchers 2` dieser zu- und/oder abgeschaltet wird. Hierbei wird je nach Zustand des die Grundversorgung sichernden Energiespeichers 4b, auch Verbraucherbatterie genannt, z.B. bei deren Ausfall der betreffende sicherheitsrelevante Verbraucher 2' an den Starterteilkreis 6a und somit an den als Starterbatterie ausgebildeten Energiespeicher 4a zur Notversorgung angeschlossen.

Um die Starterbatterie 4a für eine derartige Notversorgung im Normalbetrieb weitgehend zu entlasten, sind die sicherheitsrelevanten Verbraucher 2' weitgehend ruhestromfrei angekoppelt. Für den Fall, dass auch die Kapazitätsgrenze der Starterbatterie 4a unterschritten wird, ist durch Ansteuerung von betreffenden Koppelelementen 14 der jeweiligen sicherheitsrelevanten Verbraucher 2` eine rangfolgemäßige Abschaltung von einzelnen Verbrauchern 2' möglich. Alternativ oder zusätzlich kann dem jeweiligen sicherheitsrelevanten Verbraucher 2` mittels Steuersignalen eine Energiemenge, insbesondere der erforderliche Strom, zugeordnet werden. Hierdurch ist eine gegenseitige Behinderung von verschiedenen Verbrauchern 2' vermieden.

Weiterhin ist eine bevorzugte Versorgung der sicherheitsrelevanten Verbraucher 2' durch Abschalten von Koppelelementen 14 erzwingbar. Dadurch bleibt die Starterbatterie ruhestromfrei. Trotzdem werden Defekte auf den Pfaden zu den sicherheitsrelevanten Verbrauchern 2` über die Anordnung 20e, 29, 28 und 30, d.h. Verbindungen 20e, einen Widerstand 29, Widerstände 28 und einen Feldeffekttransistor 30, voll überwachbar und werden an den Anschlüssen bzw. Ausgängen 34 erkannt, die auch eine spannungsgesteuerte Umschaltung durch das Koppelelement 14 ermöglichen.

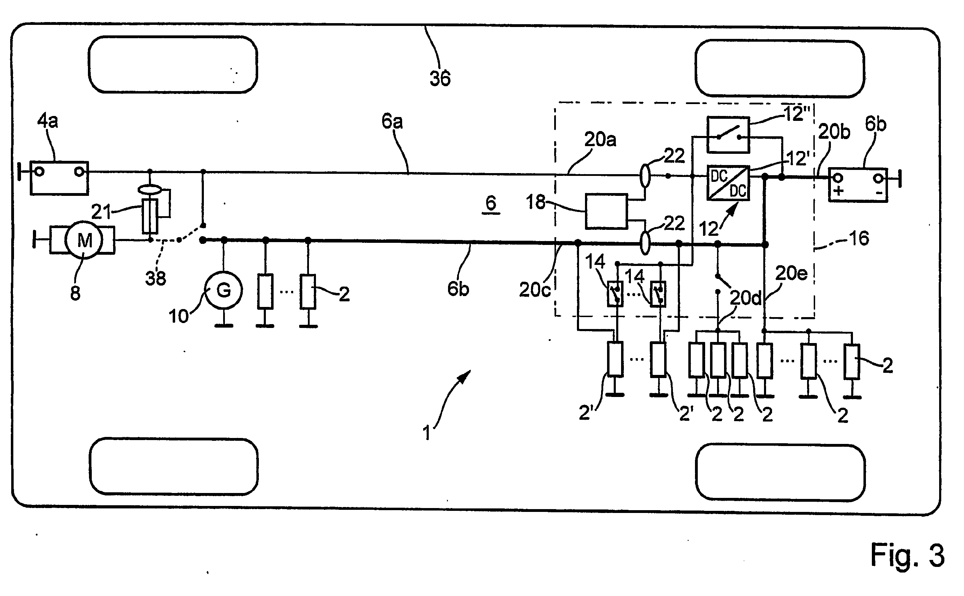

Figur 3 zeigt eine Anordnung 1 für ein Bordnetz in einem Fahrzeug 36. Für eine mehrfache, auch in kritischen Situationen ausreichende Versorgung von sicherheitsrelevanten Verbrauchern 2' sind die Teilkreise 6a und 6b örtlich voneinander getrennt angeordnet. Beispielsweise ist der für die Startfähigkeit erforderliche Starterteilkreis 6a mit dem zugehörigen Energiespeicher 4a und dem Starter 8 an einer besonders unfallsicheren Position im Fahrzeug 36 und weitgehend vom Verbraucherteilkreis 6b mit dem zugehörigen Energiespeicher 4b versetzt angeordnet oder umgekehrt. Hierdurch ist sichergestellt, dass selbst bei Ausfall eines der beiden Energiespeicher 4a oder 4b durch Kopplung der beiden Teilkreise 6a und 6b mittels des Netzkoppelelements 12 eine Versorgung der als sicherheitsrelevant eingestuften Verbraucher 2' möglich ist. Bevorzugt ist das Steuergerät 16 ebenfalls an einem besonders unfallsicheren Ort im Fahrzeug 36 angeordnet.

Je nach Art und Ausführung der Anordnung 1 können die Energiespeicher 4a und 4b derart dimensioniert sein, dass diese nur zusammengeschaltet die für einen Kaltstart erforderliche Lademenge aufweisen. Hierzu ist ein Schaltelement 38, welches die beiden Energiespeicher 4a und 4b miteinander koppelt, vorgesehen. Eine derartige Dimensionierung der Energiespeicher 4a und 4b hinsichtlich einer geringen Einzelkapazität ermöglicht geringe Kosten und insbesondere ein geringes Gewicht.

## Patentansprüche

1. Anordnung (1) zur Spannungsversorgung mehrerer Verbraucher (2, 2'), insbesondere eines Fahrzeugs (36), mit einem mindestens zwei Energiespeicher (4a, 4b) umfassenden Bordnetz (6), von denen ein erster Energiespeicher (4a) in einem Starterteilkreis (6a) mit einem Starter (8) zum Anlassen eines Motors verbunden ist, und von denen ein zweiter Energiespeicher (4b) in einem Verbraucherteilkreis (6b) mit dem Verbraucher (2, 2') verbunden ist, wobei
ein Steuergerät (16) ausgebildet ist, das aufweist:
- ein Koppelelement (12), über das der Starterteilkreis (6a) mit dem Verbraucherteilkreis (6b) verbindbar ist,
- zusätzliche Koppelelemente (14), von denen über jedes jeweils ein als sicherheitsrelevant eingestufter Verbraucher (2') mit dem Starterteilkreis (6a) verbindbar ist, und
- ein Messmittel (22) zur Erfassung von Daten, aus denen eine Datenverarbeitungseinheit (18) des Steuergeräts (16) den Zustand der Energiespeicher (4a, 4b) eines jeweiligen Teilkreises (6a, 6b) ermittelt kann, **dadurch gekennzeichnet dass** das Messmittel (22) weitere daten (32, 34) erfasst, die Informationen über einen Strom (Is) zu einem sicherheitsrelevanten Verbraucher (2') sowie einer Spannung (Uc), die über einen sicherheitsrelevanten Verbraucher (2') abfällt, liefern, so dass die Datenverarbeitungseinheit (18) fortlaufend den Zustand der Energiespeicher (4a, 4b) der Teilkreise (6a, 6b) sowie der sicherheitsrelevanten Verbraucher (2') und der Pfade zu den sicherheitsrelevanten Verbrauchern (2') überwachen und ein Schalten des Koppelelements (12) und/oder der zusätzlichen Koppelelemente (14) ansprechend auf diesen Zustand ansteuern kann.

2. Anordnung nach Anspruch 1,
**dadurch gekennzeichnet,**
**dass**,
die Datenverarbeitungseinheit (18) in dem Steuergerät (16) die durch an jeweilige sicherheitsrelevante Verbraucher (2') durch zugehörige freigeschaltete Koppelelemente (14) angelegte Spannung des ersten. Energiespeichers (4a) unabhängig vom Zustand des Verbraucherteilkreises (6b) zur stromlosen Überwachung und Bestimmung der Verfügbarkeit einer Versorgung des jeweiligen sicherheitsrelevanten Verbrauchers (2') verwendet und das Steuergerät ein Koppelelement (12") oder eine Sicherung neben dem Koppelelement, (12") entsprechend der bestimmten Verfügbarkeit der Versorgung ansteuert.

3. Anordnung nach Anspruch 1.oder 2,
**dadurch gekennzeichnet,**
**dass**,
das Steuergerät (16)
- in einem Normalbetrieb, wenn bestimmt ist, dass der Verbraucherteilkreis (6b) voll verfügbar ist, das Schalten des Koppelelements (12, 12") derart ansteuert, dass der sicherheitsrelevante Verbraucher (2') nur durch den Verbraucherteilkreis (6b) versorgt wird, in einer zweiten Betriebsart, wenn bestimmt ist, dass der Verbraucherteilkreis (6b) nicht voll verfügbar ist, das Schalten des Koppelelements (12, 12") derart ansteuert, dass der Verbraucherteilkreis (6b) über das Koppelelement (12") von dem ersten Energiespeicher (4a) und dem Starterteilkreis (6a) gestützt wird, um die gesamte Versorgung zu gewährleisten, und
in einer dritten Betriebsart, wenn bestimmt ist, dass der Verbraucherteilkreis (6b) vollständig ausgefallen ist, das Schalten des Koppelelements (12") derart ansteuert, dass das Koppelelement (12") aufgetrennt wird oder eine Sicherung neben dem Koppelelement (12") eine Trennung von starterteilkreis (6a) und Verbraucherteilkreis (6b) erzielt und der sicherheitsrelevante Verbraucher (2') nur über den Starterteilkreis (6a) aus der ersten Energiequelle (4a) versorgt wird.

4. Anordnung nach einem der Ansprüche 1 bis 3,
**dadurch gekennzeichnet,**
**dass**,
die Datenverarbeitungseinheit aus den Daten (32, 34) eine je sicherheitsrelevantem Verbraucher (2') entnommene Ladungsmenge ermitteln und in Abhängigkeit vom Zustand des Energiespeichers (4a, 4b) und/oder einer Rangfolge des betreffenden sicherheitsrelevanten Verbrauchers (2'), das Koppelelement (12) und/oder die zusätzlichen Koppelelemente (14) ansteuern und/oder den sicherheitsrelevanten Verbraucher (2') zu- und/oder abschalten kann.

5. Anordnung nach einem der Ansprüche 1 bis 4,
**dadurch gekennzeichnet,**
**dass**,
wenn die Datenverarbeitungseinheit (18) ermittelt, dass der zweite Energiespeicher (4b) eine Kapazitätsgrenze unterschritten hat oder ausgefallen ist, der sicherheitsrelevante Verbraucher (2') über das Koppelelement (12) mit dem ersten Energiespeicher (4a) verbunden wird.

6. Anordnung nach Anspruch 5,
**dadurch gekennzeichnet,**
**dass**,
wenn die Datenverarbeitungseinheit (18) ermittelt, dass auch eine Kapazitätsgrenze des ersten Energiespeichers (4a) unterschritten ist, das jeweilige zusätzliche. Koppelelement (14) der sicherheitsrelevanten Verbraucher (2') derart angesteuert werden, dass eine rangfolgemäßige Abschaltung von einzelnen sicherheitsrelevanten Verbrauchern (2') erfolgt.

7. Anordnung nach einem der Ansprüche 1 bis 6,
**dadurch gekennzeichnet,**
**dass**,
wenn die Datenverarbeitungseinheit (18) aus den ihr zugeführten Daten ermittelt, welche Energiemenge für den jeweiligen sicherheitsrelevanten Verbraucher (2') erforderlich ist und sicherstellt, dass dem sicherheitsrelevanten Verbraucher (2') nur diese Energiemenge zugeführt wird.

8. Anordnung nach einem der Ansprüche 1 bis 7,
**dadurch gekennzeichnet,**
**dass**
die sicherheitsrelevanten Verbraucher (2') mittels des zusätzlichen Koppelelements (14) ganz oder weitgehend ruhestromfrei an den Starterteilkreis (6a) angekoppelt sind.

9. Anordnung nach einem der Ansprüche 1 bis 8,
**dadurch gekennzeichnet,**
**dass**
das Steuergerät (16) in Abhängigkeit von den erfassten Daten die Verbraucher (2) und/oder die sicherheitsrelevanten Verbraucher (2') schaltet.

10. Anordnung nach einem der Ansprüche 1 bis 9,
**dadurch gekennzeichnet,**
**dass**
das zusätzliche Koppelelement (14) mindestens einen Feldeffekttransistor (24) und eine Diode (26) umfasst.

11. Anordnung nach einem der Ansprüche 1 bis 10,
**dadurch gekenhzeichnet**,
dass
das Koppelelement (12) als Schalter (12") oder Gleichspannungswandler (12') ausgebildet ist.

12. Anordnung nach einem der Ansprüche 1 bis 11,
**dadurch gekennzeichnet,**
**dass**
die Energiespeicher (4a, 4b) derart dimensioniert sind, dass diese nur zusammengeschaltet die für einen Kaltstart einer Verbrennungsmaschine erforderliche Lademenge aufweisen.

## Claims

1. Arrangement (1) for supplying voltage to a number of loads (2, 2'), in particular in a vehicle (36), having a vehicle power supply system (6) which has at least two energy stores (4a, 4b), a first energy store (4a) of which is connected in a starter circuit element (6a) to a starter (8) for starting an engine, and a second energy store (4b) of which is connected in a load circuit element (6b) to the load (2, 2'), with a controller (16) being provided, which has:
- a coupling element (12), via which the starter circuit element (6a) can be connected to the load circuit element (6b),
- additional coupling elements (14), via each of which in each case one load (2') which is classified as being safety-relevant can be connected to the starter circuit element (6a), and
- a measurement means (22) for detection of data, from which a data processing unit (18) in the controller (16) can determine the state of the energy stores (4a, 4b) for each circuit element (6a, 6b), **characterized in that** the measurement means (22) detects further data (32, 34) which supplies information about a current (Is) to a safety-relevant load (2') as well as a voltage (Uc) which is dropped across a safety-relevant load (2') so that the data processing unit (18) can continuously monitor the state of the energy stores (4a, 4b) for the circuit elements (6a, 6b) as well as the safety-relevant loads (2') and the paths to the safety-relevant loads (2') and can control switching of the coupling element (12) and/or of the additional coupling elements (14) in response to this state.

2. Arrangement according to Claim 1,
**characterized**
**in that**
the data processing unit (18) in the controller (16) uses the voltage of the first energy store (4a), which is applied to respective safety-relevant loads (2') by associated disconnected coupling elements (14), for current-free monitoring and determination of the availability of supply to the respective safety-relevant load (2') independently of the state of the load circuit element (6b) and the controller drives a coupling element (12") or a safety device in addition to the coupling element (12") corresponding to the determined availability of the supply.

3. Arrangement according to Claim 1 or 2,
**characterized**
**in that**
the controller (16)
- in a normal mode, when it is determined that the load circuit element (6b) is fully available, controls the switching of the coupling element (12, 12") such that the safety-relevant load (2') is supplied only by the load circuit element (6b),
in a second operating mode, when it is determined that the load circuit element (6b) is not fully available, controls the switching of the coupling element (12, 12") such that the load circuit element (6b) is supported via the coupling element (12") by the first energy store (4a) and the starter circuit element (6a), in order to ensure the entire supply, and
in a third operating mode, when it is determined that the load circuit element (6b) has failed completely,
controls the switching of the coupling element (12") such that the coupling element (12") is disconnected or a safety device in addition to the coupling element (12") achieves disconnection from the starter circuit element (6a) and the load circuit element (6b), and the safety-relevant load (2') is supplied only via the starter circuit element (6a) from the first energy source (4a).

4. Arrangement according to one of Claims 1 to 3,
**characterized**
**in that**
the data processing unit can determine an amount of charge which is drawn by each safety-relevant load (2') from the data (32, 34), can control the coupling element (12) and/or the additional coupling elements (14) as a function of the state of the energy store (4a, 4b) and/or of the ranking of the relevant safety-relevant load (2'), and/or can connect and/or disconnect the safety-relevant load (2').

5. Arrangement according to one of Claims 1 to 4,
**characterized**
**in that**
when the data processing unit (18) determines that the second energy store (4b) has fallen below a capacity limit or has failed, the safety-relevant load (2') is connected to the first energy store (4a) via the coupling element (12).

6. Arrangement according to Claim 5,
**characterized**
**in that**
when the data processing unit (18) determines that a capacity limit of the first energy store (4a) has also been undershot, the respective additional coupling element (14) for the safety-relevant loads (2') is controlled such that individual safety-relevant loads (2') are disconnected on the basis of their ranking.

7. Arrangement according to one of Claims 1 to 6,
**characterized**
**in that**
the data processing unit (18) determines from the data supplied to it the amount of energy which is required for the respective safety-relevant load (2') and ensures that only this amount of energy is supplied to the safety-relevant load (2').

8. Arrangement according to one of Claims 1 to 7,
**characterized**
**in that**
the safety-relevant loads (2') are coupled to the starter circuit element (6a) entirely or largely without any quiescent current by means of the additional coupling element (14).

9. Arrangement according to one of Claims 1 to 8,
**characterized**
**in that**
the controller (16) switches the loads (2) and/or the safety-relevant loads (2') as a function of the detected data.

10. Arrangement according to one of Claims 1 to 9,
**characterized**
**in that**
the additional coupling element (14) comprises at least one field-effect transistor (24) and a diode (26).

11. Arrangement according to one of Claims 1 to 10,
**characterized**
**in that**
the coupling element (12) is in the form of a switch (12") or a DC/DC voltage converter (12').

12. Arrangement according to one of Claims 1 to 11,
**characterized**
**in that**
the energy stores (4a, 4b) are of such a size that they have the amount of charge required for cold starting of an internal combustion engine only when they are interconnected.

## Revendications

1. Système (1) pour l'alimentation en tension de plusieurs consommateurs d'énergie (2, 2'), notamment d'un véhicule (36), avec un réseau de bord (6) comprenant au moins deux accumulateurs d'énergie (4a, 4b) dont un premier accumulateur d'énergie (4a) est relié dans un circuit partiel de démarrage (6a) à un démarreur (8) pour démarrer un moteur, et dont un deuxième accumulateur d'énergie (4b) est relié dans un circuit partiel de consommateurs d'énergie (6b) au consommateur d'énergie (2, 2'), dans lequel on a développé un dispositif de commande (16) comportant :
- un élément de couplage (12), permettant de relier le circuit partiel de démarrage (6a) au circuit partiel des consommateurs d'énergie (6b),
- des éléments de couplage supplémentaires (14), chacun permettant de relier respectivement un consommateur d'énergie (2') qualifié comme relevant de la sécurité, au circuit partiel de démarrage (6a), et
- un moyen de mesure (22) pour enregistrer des données à l'aide desquelles une unité de traitement des données (18) du dispositif de commande (16) peut déterminer l'état des accumulateurs d'énergie (4a, 4b) d'un circuit partiel respectif (6a, 6b),
**caractérisé en ce que** le moyen de mesure (22) enregistre d'autres données (32, 34) fournissant des informations concernant un courant (Is) vers un consommateur d'énergie relevant de la sécurité (2') ainsi qu'une tension (Uc) représentant la chute à travers un consommateur d'énergie relevant de la sécurité (2'), de telle sorte que l'unité de traitement des données (18) surveille en permanence l'état des accumulateurs d'énergie (4a, 4b) des circuits partiels (6a, 6b) ainsi que le consommateur d'énergie relevant de la sécurité (2') et le chemin vers les consommateurs d'énergie relevant de la sécurité (2'), et qu'elle puisse actionner une connexion de l'élément de couplage (12) et/ou des éléments de couplage supplémentaires (14) en réponse à cet état.

2. Système selon la revendication 1, **caractérisé en ce que** l'unité de traitement des données (18) du dispositif de commande (16) utilise la tension du premier accumulateur d'énergie (4a) appliquée aux consommateurs d'énergie relevant de la sécurité (2') respectifs par l'intermédiaire des éléments de couplage (14) correspondants branchés en mode ouvert indépendamment de l'état du circuit partiel des consommateurs d'énergie (6b), pour la surveillance sans courant et pour la détermination de la disponibilité d'une alimentation pour le consommateur d'énergie relevant de la sécurité (2') respectif et **en ce que** le dispositif de commande actionne un élément de couplage (12"), ou un fusible à côté de l'élément de couplage (12"), en fonction de la disponibilité déterminée de l'alimentation.

3. Système selon la revendication 1 ou 2,
**caractérisé en ce que**
- en fonctionnement normal, le dispositif de commande (16) actionne la commutation de l'élément de couplage (12, 12") de telle sorte que les consommateurs d'énergie relevant de la sécurité (2') ne sont alimentés que par l'intermédiaire du circuit partiel des consommateurs d'énergie (6b) lorsqu'il est déterminé que le circuit partiel des consommateurs d'énergie (6b) est pleinement utilisable,
- dans un deuxième mode de fonctionnement, le dispositif de commande (16) actionne la commutation de l'élément de couplage (12, 12") de telle sorte que le circuit partiel des consommateurs d'énergie (6b) s'appuie sur le premier accumulateur d'énergie (4a) et sur le circuit partiel de démarrage (6a) par l'intermédiaire de l'élément de couplage (12") pour assurer la totalité de l'alimentation lorsqu'il est déterminé que le circuit partiel des consommateurs d'énergie (6b) n'est pas pleinement utilisable, et
- dans un troisième mode de fonctionnement, le dispositif de commande (16) actionne la commutation de l'élément de couplage (12") de telle sorte que l'élément de couplage (12") soit séparé ou qu'un fusible à côté de l'élément de couplage (12") assure une séparation du circuit partiel de démarrage (6a) et du circuit partiel des consommateurs d'énergie (6b), et que le consommateur d'énergie relevant de la sécurité (2') ne soit plus alimenté que par l'intermédiaire du circuit partiel de démarrage (6a) à partir de la première source d'énergie (4a) lorsqu'il est déterminé que le circuit partiel des consommateurs d'énergie (6b) est totalement hors service.

4. Système selon une des revendications 1 à 3, **caractérisé en ce qu'**à partir des données (32, 34), l'unité de traitement des données détermine une quantité de charge prélevée par chaque consommateur d'énergie relevant de la sécurité (2') et, en fonction de l'état de l'accumulateur d'énergie (4a, 4b) et/ou d'un ordre de priorité du consommateur d'énergie relevant de la sécurité (2') concerné, elle peut actionner l'élément de couplage (12) et/ou les éléments de couplage supplémentaires (14) et/ou elle peut brancher et/ou débrancher le consommateur d'énergie relevant de la sécurité (2').

5. Système selon une des revendications 1 à 4, **caractérisé en ce que** le consommateur d'énergie relevant de la sécurité (2') est relié par l'intermédiaire de l'élément de couplage (12) au premier accumulateur d'énergie (4a) lorsque l'unité de traitement des données (18) détermine que le deuxième accumulateur d'énergie (4b) a passé au-dessous d'une limite de capacité ou qu'il est hors service.

6. Système selon la revendication 5, **caractérisé en ce que** l'élément de couplage supplémentaire (14) respectif des consommateurs d'énergie relevant de la sécurité (2') est actionné de telle sorte qu'un débranchement par ordre de priorité des consommateurs d'énergie individuels relevant de la sécurité (2') a lieu lorsque l'unité de traitement des données (18) détermine que la capacité du premier accumulateur d'énergie (4a) a également passé au-dessous d'une limite.

7. Système selon une des revendications 1 à 6, **caractérisé en ce que** l'unité de traitement des données (18) détermine, à partir des données qui lui sont acheminées, quelle quantité d'énergie est nécessaire pour le consommateur d'énergie respectif relevant de la sécurité (2'), et assure que seule cette quantité d'énergie est acheminée au consommateur d'énergie relevant de la sécurité (2').

8. Système selon une des revendications 1 à 7, **caractérisé en ce que** les consommateurs d'énergie relevant de la sécurité (2') sont accouplés au circuit partiel de démarrage (6a) au moyen de l'élément de couplage supplémentaire (14) totalement ou en grande partie sans courant de repos.

9. Système selon une des revendications 1 à 8, **caractérisé en ce que** le dispositif de commande (16) connecte les consommateurs d'énergie (2) et/ou les consommateurs d'énergie relevant de la sécurité (2') en fonction des données enregistrées.

10. Système selon une des revendications 1 à 9, **caractérisé en ce que** l'élément de couplage supplémentaire (14) comporte au moins un transistor à effet de champ (24) et une diode (26).

11. Système selon une des revendications 1 à 10, **caractérisé en ce que** l'élément de couplage (12) est réalisé sous la forme d'un commutateur (12") ou d'un convertisseur de courant continu (12').

12. Système selon une des revendications 1 à 11, **caractérisé en ce que** les accumulateurs d'énergie (4a, 4b) sont dimensionnés de telle sorte que ceux-ci ne possèdent la quantité de charge nécessaire pour un démarrage à froid d'un moteur à combustion que lorsqu'ils sont accouplés.
